# EUROPEAN PATENT APPLICATION

(11) **EP 4 607 385 A1**
(43) Date of publication of application: **27.08.2025**
(21) Application number: 24158800.3
(22) Date of filing: 21.02.2024
(51) Int. Cl.: G06F 21/57, H04L 9/40

(54) **AUTOMATIC RISK ASSESSMENT OF A COMPONENT OF A TECHNICAL SYSTEM**

(71) Applicant: Siemens Aktiengesellschaft, 80333 München (DE)
(72) Inventor: Kröselberg, Dirk, 81541 München (DE); Limmer, Tobias, 85276 Pfaffenhofen a.d. Ilm (DE)
(74) Representative: Siemens Patent Attorneys

(57) **Abstract**

An automatic risk assessment method for automatically determining an action (ACT) to address a security vulnerability risk (Ra) of a component (C1 - Cn) of a technical system (10) is provided. The method comprises:
a) determining security vulnerability data (V1, Vn) of the technical system (10) which comprises a plurality of components (C1 - Cn),
b) mapping the determined security vulnerability data (Rg_v1 - Rg_vn) of the technical system (10) to each component (C1 - Cn) of the technical system (10),
c) calculating determining a component specific security vulnerability risk (Ra) for a component (C1 - Cn) of the technical system (10) based on the mapped determined security vulnerability data (Rg_v1 - Rg_vn), and
d) determining at least one action (AP, ACT) based on the component specific security vulnerability risk (Ra), wherein the at least one action (AP, ACT) is suitable to reduce the component specific security vulnerability risk (Ra) of the component (C1 - Cn).

This automatic risk assessment and determination of actions to overcome such risks provides a fast approach for reducing security risks of a technical system and thus enhances the overall security of such a technical system.

## Description

The present invention relates to an automatic risk assessment method for automatically determine an action to address a security vulnerability risk of a component of a technical system. Moreover, the invention relates to an automatic risk assessment system for automatically determine an action to address a security vulnerability risk of a component of a technical system.

Technical systems, which comprise typically a plurality of components, also called, assets, like switches, computers, any devices, components, or software applications, used in automation systems, may have cybersecurity risks. Cybersecurity risk in this context is the potential for loss or damage of the technical system and/or its components as a result of an attack by a malicious actor. In order to avoid such loss or damage, these risks should be identified and avoided as far as possible.

The derivation of actions to reduce or avoid cybersecurity risks within a given technical system is typically a manual process. Typically, a responsible person (such as an administrator, operator, security engineer, and/or security responsible) manually reviews applicable potential vulnerabilities or other risks, classifies them in the specific operational and technical system context, and decides whether an action is required or not. This procedure applies e.g. to automation systems in industrial environments, like process automation, factory automation, or energy generation and distribution.

For classifying the cybersecurity risk of a technical system, the Common Vulnerability Scoring System (CVSS) may be used which is an open industry standard for assessing the severity of vulnerabilities of the technical system. Vulnerabilities can be weaknesses of the technical system and/or its components, in either the hardware itself, or the software that runs on the hardware or that runs virtually, e.g., in a virtualized or cloud environment. CVSS attempts to assign severity scores to vulnerabilities. For example, a vulnerability with a very high CVSS score, that in general introduces a severe risk to affected (software) components and devices, may be considered in the technical system that is given, and the resulting action may be to apply a patch or another mitigation fixing the security issue.

As mentioned, general ratings of security vulnerabilities include the internationally standardized CVSS score (see https://www.first.org/cvss/). Those ratings may also be applied to configuration settings that impact a system's security. Security vulnerabilities are typically published and enumerated in the form of CVE numbers (see https://www.cve.org/ResourcesSupport/FAQs)
Security vulnerabilities may be published by software and component vendors, are typically enumerated with CVE numbers, and typically receive a global risk score according to the CVSS scheme (CVSS Score, or Severity). This risk score may include additional factors such as the vulnerability exploitation state.

In this context, it should be noted that, independent of the grammatical term usage, individuals with male, female or other gender identities are included within the term.

As explained above, until now actions in view of identified and classified vulnerabilities of components of a technical system or the technical system itself are selected manually.

Thus, it is one object of the present invention to provide an automatic way of addressing identified vulnerabilities of components of a technical system as well as resulting risks.

Accordingly, an automatic risk assessment method for automatically determine an action to address a security vulnerability risk of a component of a technical system is provided.

The method comprises the following steps:
a) determining security vulnerability data of the technical system which comprises a plurality of components,
b) mapping the determined security vulnerability data of the technical system to each component of the technical system,
c) calculating determining a component specific security vulnerability risk for a component of the technical system based on the mapped determined security vulnerability data, and
d) determining at least one action based on the component specific security vulnerability risk, wherein the at least one action is suitable to reduce the component specific security vulnerability risk of the component.

In contrast to previous approaches, where human interaction was needed to decide which action should be performed to reduce the component specific security vulnerability risk, the here described method provides an automatic way, without the need for human interaction, for initiating actions to address risks that can be derived from security vulnerabilities or configuration settings that negatively impact a system's security. In the context of this description, the term security vulnerability will be used synonymously to any other kind of configuration setting or the like, which may impact the security of the system or any component, and should not be restricted to vulnerabilities as such.

Thus, the provided method may enhance the overall security of the system as no human intervention or interaction is needed, thus making addressing risks and performing corresponding action faster and mor reliable.

In the context herein, the technical system may be any kind of system having one or more technical components, which can be implemented in software and/or hardware. The technical components, also called assets, may be computers, switches, robots, software application, and any other kind of components executing software, that are used in a technical system. The technical system may be for example an automation system or any other kind of technical system.

As described above, the vulnerability of a component may define the weaknesses of a component, in either the hardware itself, or the software that runs on the hardware. CVSS (Common Vulnerability Scoring System) or similar scoring systems may be used to assign severity scores to vulnerabilities of a component or the technical system itself. The security vulnerability risk may thus define the risk or score or probability of a component to be subject to an attack or to contribute to any damage of the technical system due to its vulnerability. The risk may depend for example on the criticality of the respective component, i.e., how important the component is for the overall technical system. For example, if the component is present in redundant form, the risk may be lower compared to the case when the component is the sole component and cannot be replaced easily.

The vulnerabilities of component(s) are typically known and are for example provided by the manufacturer of the respective component or are known from a standard the respective component is based on. Known vulnerabilities of components of the applicant are for example published in the SSAs (Siemens Security Advisories) under https://www.siemens.com/global/en/products/services/cert.html. Independent of the manufacturer, vulnerabilities may also be published by NIST (National Institute of Standards and Technology) in the NIST Vulnerability Database, see http://nvd.nist.gov/.

In step a), the security vulnerability data of the overall technical system is determined. Thus, preferably all information on all components within the technical system in view of the above described vulnerabilities is gathered. This information may be provided by the technical system and/or its components and may comprise information which is known for identifying the vulnerabilities of the component(s) and thus the technical system, such as information regarding a component like manufacturer, type, software version, hardware version, serial number, type of software, installed applications including version numbers, configuration parameters and so on. Typically, the information on each component is provided by the manufacturer and can be easily provided, either from databases as described above or may be stored in the components. In this step, the data is generally gathered, i.e., without assignment to specific components.

The security vulnerability data may of the technical system may also comprise configuration problems and other security relevant problems which could cause insecurities of the technical system, for example cyber security threats.

In the next step b), the overall security vulnerability data is mapped to the specific components, the above explained security vulnerability risk is calculated for each component, or for at least one component. This risk is the so-called component specific security vulnerability risk as the overall security vulnerability data is mapped to the specific components. Thus, each security vulnerability contained in the overall security vulnerability data is assigned to the corresponding component to which it applies, or which is responsible for this vulnerability.

Subsequently, in step c), the above explained security vulnerability risk is determined for each component, or for at least one component. This risk is the so-called component specific security vulnerability risk. The security vulnerability risk of a component is based on the assigned or mapped security vulnerabilities and may be for example a risk level or a number or a stage of a scale or any other kind of classification or grading of the security vulnerability risk. For example, the security vulnerability risk of a component in the form of a risk level may define that a component has a high risk, middle risk or low risk, but such a risk level may also have any other number of level stages.

Based on the component specific security vulnerability risk, the method may then determine in step d) a corresponding action, or more than one corresponding action, which is suitable for reducing the risk of the respective component. Reducing the risk of the respective component may for example refer to reducing the security risk level (as described above) of the respective component.

The determination of such actions may include a determination of the type of action and/or of the timeline, i.e. at which point of time the action should be performed.

Possible Actions are: installation of security updates/patches; application of configuration change(s); application of other suitable mitigations to address a vulnerability and reduce or mitigate risks, e.g. blocking network connectivity on interfaces that are subject to potential related cyber-attacks (this may also be enforced by external components such as firewalls); changes to physical security measures, e.g. changes to access control policies and execution of those, re-positioning of security cameras, activation or repositioning of detection sensors, activation of alarming mechanisms, etc.; temporary automatic disabling of system parts or components; adjustment of maintenance intervals (workflow adjustments)

Possible choices regarding the timeline of the action (how urgent is the application of an action of a specific type) may include: immediate application of the action; out-of-band application of the action (i.e., earlier than the next regular/scheduled maintenance activity); assigning the application of the action to next regular maintenance activity; scheduling the action for reassessment (within a certain time period); archiving/closing the action (for example when no longer necessary or obsolete etc.).

It should be noted that these actions and timeline of the action are just examples and further actions and timelines are possible.

According to an embodiment, step a) comprises determining a plurality of general risk score values for the overall technical system. Each vulnerability, which may be present in the technical system, may be scored using a risk score value. Such a risk score value may represent the severity of the vulnerability, e.g., CVSS may be used as described above. Using such risk score values may provide a comfortable way of rating or quantifying the several vulnerabilities within the technical system which can then be easily used in the following steps, for example assigned to single components.

According to a further embodiment, step b) comprises assigning a sub-group of the plurality of general risk score values to each component. Each component may be responsible for one or more of the vulnerabilities of the overall technical system or may be responsible for none of the vulnerabilities. Depending on that, the vulnerabilities together with their corresponding risk score value may be assigned to the component responsible for the respective vulnerability. This has the advantage that the action(s), which may be determined by the described method based on the vulnerabilities, may be precisely directed to the respective components, and are not generally directed to the whole technical system.

In particular, each sub-group may comprise at least one of the plurality of general risk score values. Further, one general risk score value may be assignable to more than one component. Thus, each component may be responsible for more than one vulnerability and each vulnerability may be induced by more than one component. Thus, when assigning the vulnerabilities and the corresponding risk score values, the risk score values may be assigned to more than one component and a component may have more than one risk score value. This may provide a comprehensive evaluation of the vulnerabilities within the technical system, taking into account for example the correlation between the vulnerabilities caused by one or more components.

According to a further embodiment, after step b), the method further comprises b1) re-calculating the assigned general risk score values based on the specific component, to which the general risk score values are assigned.

In this step, the assigned general risk score values may be fine-tuned, for example based on the specific features of the component itself as well as in the context of the system. This may provide a further improvement of the selection of possible actions.

The algorithm for re-calculating of the assigned risk value can be any suitable one. For example, system or component specific risk attributes may be determined and utilized to improve the global CVSS rating and determine a specific risk score value for the component.

Such risk attributes may include (among others):
- The exposure of a zone, component, or component interface (physical, logical)
- The impact of a zone, component, or interface if negatively impacted by an attack. Such impact may be human harm, degradation of operation or business, financial impact, environmental impact, or negative impact on reputation. Impact may be an overall attribute or may be considered as a set of attributes in several categories, like confidentiality, integrity, availability.

According to a further embodiment, in step c), the component specific security vulnerability risk is calculated determined, for example calculated, by aggregating the assigned general risk score values of a component. For example, aggregating the assigned general risk score values of a component comprises selecting the maximum value of the assigned general risk score values as the value of the component specific security vulnerability risk. This may provide a selection with reduced requirements concerning the computing capacity of a utilized system. Alternatively, the assigned general risk score values may be totaled, resulting in a total risk score value. This may provide a more accurate assessment of the risk score of the respective component.

According to a further embodiment, after step d), the method further comprises e) applying the determined at least one action automatically to the component. Thus, instead of a manual handling of actions to overcome vulnerabilities of the technical system, i.e. manual selection and application of actions, the determined action(s) may be applied automatically, without any further human interaction. This may provide a faster solution and reduction of determined vulnerabilities, thus improving the overall security of the technical system.

According to a further embodiment, the method further comprises providing the determined at least one action to a user for review before carrying out step e). In this case, a (minor) human action may be integrated into the automatic method. This step may be used as a protection step prior to the automatic application of the action. The action to be carried out may be provided to a user, for example by displaying the action on a display unit, where the user can review and confirm the proposed action. If the action is confirmed by the user, the action may be automatically carried out. Otherwise, the proposed action may be stopped, and a new action may be selected.

In an embodiment, if the user does not react to the provided action, the method may continue with the automatic application of the action after a predefined time period, for example to ensure the security and proper function of the technical system. The action(s) may then either be automatically applied or a corresponding automation triggered (e.g. for patch rollout, or automated reconfiguration or change of enforced security policies).

According to a further embodiment, the at least one action is determined in step d) based on the component specific security vulnerability risk and one or more action control parameters. The one or more action control parameters may specify characteristics of the technical system, of the specific component, of the workflow performed by the technical system and/or the component, and/or of a zone within the technical system in which the specific component is located. Using these action control parameters, the respective determined action may be accurately defined. Hereby, also a correlation between the action control parameters and the component specific security vulnerability risk as well as the respective component and the overall technical system may be taken into account.

Thus, the action control parameters may be in the categories of S (system-wide), Z (zone specific), A (asset specific), W (workflow specific) that are used for calculation determining of the action. Each possible action may have a different set of action-specific action control parameters.

The action control parameters may include the following examples:
- S_c
   Criticality of the technical system in the operational environment (overall rating, e.g. critical infrastructure like regional power distribution grid would typically be higher than a standalone local (e.g. campus) power supply.
- A_t
   asset type, i.e., type of the component:
   e.g. the type of hardware or software component: embedded device / network device / security device / operating system / application / container
- A_tim
   Asset timeliness: runtime asset or offline asset
   Involvement in runtime process control, e.g. for a PLC or IED; offline assets include e.g. engineering stations that are not required during active operation.
- A_c
   asset criticality: essential, primary, or secondary process control asset
   (essential: e.g. safety control; primary: e.g. PLC for regular automated process; secondary: e.g. controller/server for coordinating primary assets or acting as communication gateways)
- A_io
   asset impact (operational):
   rating of impact on business operation (e.g., the impact of a central PLC in case of unavailability is higher than the impact of a backup HMI panel device)
- A_is
   asset security impact:
   rating of impact on cybersecurity state of the business operation. (e.g. the impact from a cybersecurity perspective of a central security server controlling update rollout or malware protection is higher than for a common switch).
   Note: A_io and A_is may alternatively be combined into a single impact parameter.
- A_l
   asset location:
   e.g. the physical / geographical location within a plant area, or at a distributed or remote location.
- A_r
   Asset redundancy: is the asset's function in case of failure during patching covered by redundancy like redundant components?
- A_Z
   zone level or topology
   E.g. using the Purdue model: Level 1 / 2 / 3 / 4, or using system design blueprints as templates, where pre-defined zoning of components is provided.
- A_pg
   data asset with associated protection goals in terms of confidentiality/integrity/availability (C/I/A), or other comparable categories like degradation of operation, human harm, reputation damage, etc.:
   Information classified as C/I/A, like personal data (C), recipes (C), sensitive measurement data (C, I), program for process control (I, A), network configuration data (A), production data (A),
   data subject to retention requirements (A).
- A_pr
   asset patching risk: known/assumed risk of unavailability or degraded performance if patched.
- A_rc
   rollout cost: value capturing financial, or personnel assets required for the possible actions, and assumed cost of any required downtime.
- A_rb
   Reliability of backup: In case of failure during application of an action, are reliable backups available to restore?
- S_c
   Compliance: does lack of addressing a vulnerability result in regulatory or contractual compliance issues.
- W_t
   Workflow timeliness: average required time for applying an action, e.g. patch installation or configuration change rollout.

It should be noted that the action control parameters are not limited to these examples and that not all action control parameters have to be used. Further, it should be noted that, in this context, asset and component are used as synonymous terms.

According to a further embodiment, the one or more action control parameters are automatically detected by inspecting the technical system or by retrieving the action control parameters from a database. For example, the action control parameters may be determined from network scans to determine the topology of the actual system, scans on the component or asset interfaces, e.g., to determine the asset type, scanning installed SW inventories and versions, or information gathered from engineering project data, etc. They may also be determined from automated interaction with an asset inventory database.

Asset related parameters like A_pg, A_r, A_rc (as described above) may also be determined at the level of a zone (asset group) instead of individual assets. This is preferable in case of similar parameters for several to many components.

Data assets with associated protection goals that are of relevance to the subsequent calculation determination of the action, are preferably determined based on the type and function of the asset (e.g. a PLC - programmable logic controller - has an automation program that is executed, and where integrity is important as otherwise the automated process will negatively be impacted).

According to a further embodiment, the one or more action control parameters are used for modifying the component specific security vulnerability risk. For example, a value S (which may have an initial default value) may be adjusted based on the action control parameters and may then be used for example to determine the timeliness of action per each type of action, which depends on the component specific security vulnerability risk. This may further improve the determination of the component specific security vulnerability risk and thus the selection of a suitable action.

The herein described method allows a substantially higher level of automation of acting on security vulnerabilities that are expected or proven to be of significance for a technical system, whether in design, or in operation. Potential actions like patch rollout can be determined automatically in relation to factors like urgency, impact on operation, maintenance workflows (e.g. patch rollout immediate, during regular patch cycle, with low priority, ...), etc.

According to a further aspect, an automatic risk assessment system for automatically determining an action to address a security vulnerability risk of a component of a technical system is provided. The automatic risk assessment system comprises a first determination unit for determining security vulnerability data of the technical system which comprises a plurality of components, a mapping unit for mapping the determined security vulnerability data of the technical system to each component of the technical system, a calculation second determination unit for calculating determining, for example calculating, a component specific security vulnerability risk for a component of the technical system based on the mapped determined security vulnerability data, and a second third determination unit for determining at least one action based on the component specific security vulnerability risk, wherein the at least one action is suitable to reduce the component specific security vulnerability risk of the component.

The respective entity, e.g., the first and the second determination units, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

The embodiments and features described with reference to the method of the present invention apply mutatis mutandis to the system of the present invention.

According to a further aspect, the invention relates to a computer program product comprising a program code for executing the above-described method for automatically determining an action to address a security vulnerability risk of a component of a technical system when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below regarding the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of a system for automatically determining an action to address a security vulnerability risk of a component of a technical system;
- Fig. 2: shows a schematic diagram of a method for automatically determining an action to address a security vulnerability risk of a component of a technical system; and
- Fig. 3: shows a schematic diagram illustrating step e) of Fig. 2 in more detail.

In the Figures, like reference numerals designate like or functionally equivalent elements, unless otherwise indicated.

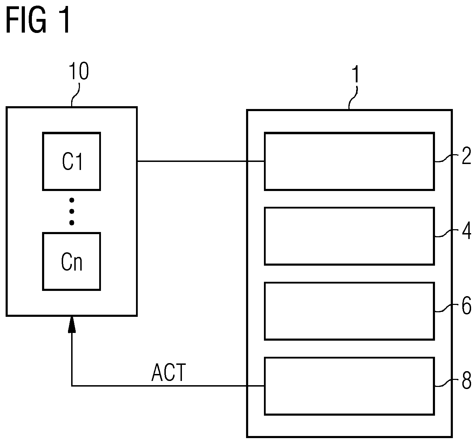

Fig. 1 shows an automatic risk assessment system 1 for automatically determine an action ACT to address a security vulnerability risk of a component C1, Cn of a technical system 10.

The system 1 comprises a first determination unit 2 for determining security vulnerability data of the technical system 10. The technical system 10 may be for example an automation system and may comprise a plurality of components C1 - Cn. The components C1 - Cn may be for example router, switches, computing devices, any other kind of component.

The technical system 10 may have a security risk which is induced by the several components C1 - Cn, each for itself as well as in combination with each other. This security risk is caused by vulnerabilities of the single components C1 - Cn. The first determination unit 2 gathers the security vulnerability data of the whole technical system 10, without an assignment to the single components C1 - Cn.

A mapping unit 4 of the system 1 may then map the determined security vulnerability data of the technical system 10 to each component C1 - Cn of the technical system 10. The security vulnerability data only indicate vulnerabilities, without a quantitative information about the risk caused by the vulnerability. Thus, a calculation second determination unit 6 of the system 1 determines, for example calculates, a component specific security vulnerability risk for a component C1 - Cn of the technical system 10 based on the mapped determined security vulnerability data. This may be done for each component C1 - Cn of the technical system 10.

A second third determination unit 8 of the system 1 may subsequently determine at least one action ACT based on the component specific security vulnerability risk, wherein the at least one action ACT is suitable to reduce the component specific security vulnerability risk of the component C1 - Cn. More than one action ACT may be determined and needed for a single component C1 - Cn. Further, actions ACT may be determined for a plurality of the components C1 - Cn, wherein some components C1 - Cn will not require any action ACT at all.

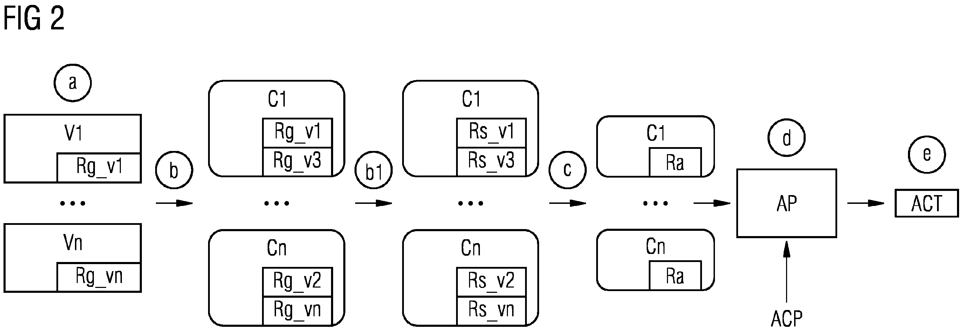

In the following, with reference to Fig. 2, a method for automatically determine an action ACT to address a security vulnerability risk of a component C1, Cn of a technical system 10, which can be carried out by the system of Fig. 1 will be exemplary described.

In step a), security vulnerability data V1 - Vn, which is expected to apply to the overall system 10, and the corresponding general risk score value (e.g., CVSS Score or Severity) Rg_vx will be gathered, where x is the vulnerability number (e.g. CVE number) with 1...n vulnerabilities.

In step b), gathered vulnerabilities V1 - Vn are mapped to the system components C1 - Cn (assets), where there are 1...n components C1 - Cn, and each component C1 - Cn can be subject to 0...n vulnerabilities V1 - Vn. Thus, each component C1 - Cn receives 0...n general risk score values Rg_v1 - Rg_vn. In the embodiment of Fig. 2, the general risk score values Rg_v1 and Rg_v3 are mapped to component C1 and the general risk score values Rg_v2 and Rg_vn are mapped to component Cn.

In step b1), an optional re-calculation of risks Rg_v1 - Rg_vn for a vulnerability V1 - Vn that is mapped to a component C1 - Cn can take place to determine a value Rs_v1 - RS_vn reflecting the given technical system 10 and the affected component C1 - Cn. This happens for each vulnerability/component pair that has been mapped in step b). The algorithm for re-calculation of the specific risk can be any suitable one.

In step c), the specific risks (Rg_v1 - Rg_vn and/or Rs_v1 - Rs_vn, depending on whether the optional step b1) has been carried out or not) are aggregated per component C1 - Cn, preferably by selecting the maximum of the individual values, resulting in the component specific risk Ra.

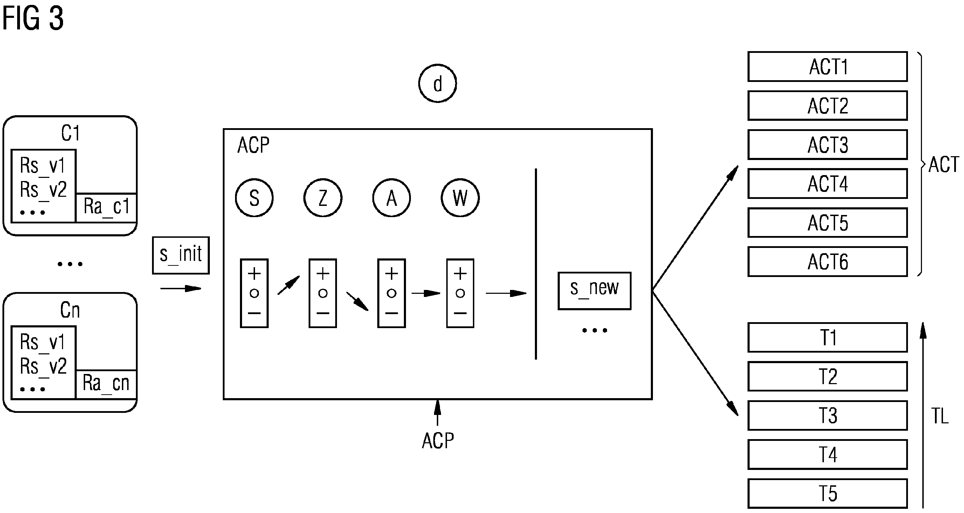

In step d), action proposals AP are calculated determined based on the component risk values Ra received from the above steps and possible defined action control parameters ACP, which will be explained below with reference to Fig. 3.

In step e), the actions ACT, corresponding to the action proposals AP, can then either be automatically applied or corresponding automation can be triggered (e.g. for patch rollout, or automated reconfiguration or change of enforced security policies).

As will be now explained with reference to Fig. 3, a value S having an initial default value can be adjusted based on the action control parameters and can then be used to determine the timeliness of an action ACT per each type of action ACT.

An exemplary implementation of step d) of Fig. 2 implements the following steps as shown in Fig. 3:
For each component C1 - Cn with the mapped, and optionally re-calculated, vulnerability Rs_v1 - Rs_vn and the component specific risk Ra_c1 - Ra_cn, a start value S_init is assigned. This could e.g. be a percentage value between 0 and 100 or discrete levels, e.g., {1, 2, 3, 4, 5}. This value S_init indicates a default timeliness of action based on the vulnerability risk rating for the respective component C1 - Cn.

The start value S_init is modified based on the following action control parameters ACP:
- system wide action control parameters S (increase by x / keep / decrease by x)
- zone specific action control parameters Z (increase by x / keep / decrease by x)
- asset specific action control parameters A (increase by x / keep / decrease by x)
- workflow specific action control parameters W (increase by x / keep / decrease by x)

The resulting modified value S_new is then used to prioritize the timeliness of actions ACT, ACT1 - ACT6. Thus, the point of time T1 - T5 along a timeline TL, at which a corresponding action ACT1 - ACT6 is to be carried out, can be defined using the value S_new. The points of time T1 - T6 may be for example immediate, out-of-band, assigned for next regular maintenance activity, etc.

This could e.g. be a 1-1 mapping of S_new in case 5 discrete levels are used, or a mapping of a percentage value in 20% steps. If the number T1 - T5 of timeliness of action categories is more or less than the 5 in the example, this can easily be adjusted.

The S_new calculation determination is specifically performed for each type of action ACT1 - ACT6. This is due to the fact that for individual action types ACT1 - ACT6, the action control parameters ACP vary in applicability and value. E.g., the workflow related adjustments for patch installation may be different than for the application of configuration changes, as these may be performed by different personnel or organizational units.

Instead of using the parameter S_init/S_new as described above, the action control parameters ACP can be combined in other ways, e.g. using weights or factors.

The herein described method may use artificial intelligence-based methods and/or machine learning algorithms for enhancing the quality of determining S_new based on the action control parameter adjustments, e.g., using data from prior execution of steps a - e (e.g. with other systems and assets, from prior execution with different vulnerabilities, a modified set of assets, etc.).

Although the present invention has been described in accordance with preferred embodiments, it is obvious for the person skilled in the art that modifications are possible in all embodiments.

## Claims

1. An automatic risk assessment method for automatically determining an action (ACT) to address a security vulnerability risk (Ra) of a component (C1 - Cn) of a technical system (10), the method comprising:
a) determining security vulnerability data (V1, Vn) of the technical system (10) which comprises a plurality of components (C1 - Cn),
b) mapping the determined security vulnerability data (Rg_v1 - Rg_vn) of the technical system (10) to each component (C1 - Cn) of the technical system (10),
c) calculating determining a component specific security vulnerability risk (Ra) for a component (C1 - Cn) of the technical system (10) based on the mapped determined security vulnerability data (Rg_v1 - Rg_vn), and
d) determining at least one action (AP, ACT) based on the component specific security vulnerability risk (Ra), wherein the at least one action (AP, ACT) is suitable to reduce the component specific security vulnerability risk (Ra) of the component (C1 - Cn).

2. The automatic risk assessment method according to claim 1, wherein step a) comprises determining a plurality of general risk score values (Rg_v1 - Rg_vn) for the overall technical system (10).

3. The automatic risk assessment method according to claim 2, wherein step b) comprises assigning a sub-group (Rg_v1, Rg_v3; Rg_v2, Rg_vn) of the plurality of general risk score values (Rg_v1 - Rg_vn) to each component (C1 - Cn).

4. The automatic risk assessment method according to claim 3, wherein each sub-group (Rg_v1, Rg_v3; Rg_v2, Rg_vn) comprises at least one of the plurality of general risk score values (Rg_v1 - Rg_vn).

5. The automatic risk assessment method according to claim 3 or 4, wherein one general risk score value (Rg_v1 - Rg_vn) is assignable to more than one component (C1 - Cn).

6. The automatic risk assessment method according to any one of the claims 3 to 5, wherein, after step b), the method further comprises b1) re-calculating the assigned general risk score values (Rg_v1 - Rg_vn) based on the specific component (C1 - Cn), to which the general risk score values (Rg_v1 - Rg_vn) are assigned.

7. The automatic risk assessment method according to any one of the claims 3 to 6, wherein, in step c), the component specific security vulnerability risk (Ra) is calculated determined by aggregating the assigned general risk score values (Rg_v1 - Rg_vn) of a component.

8. The automatic risk assessment method according to claim 7, wherein aggregating the assigned general risk score values (Rg_v1 - Rg_vn) of a component (C1 - Cn) comprises selecting the maximum value of the assigned general risk score values (Rg_v1 - Rg_vn) as the value of the component specific security vulnerability risk (Ra).

9. The automatic risk assessment method according to any one of the preceding claims, wherein, after step d), the method further comprises e) applying the determined at least one action (ACT) automatically to the component (C1 - Cn).

10. The automatic risk assessment method according to claim 9, wherein the method further comprises providing the determined at least one action (AP, ACT) to a user for review before carrying out step e).

11. The automatic risk assessment method according to any one of the preceding claims, wherein the at least one action (AP, ACT) is determined in step d) based on the component specific security vulnerability risk (Ra) and one or more action control parameters (ACP).

12. The automatic risk assessment method according to claim 11, wherein the one or more action control parameters (ACP) specify characteristics of the technical system (10), of the specific component (C1 - Cn), of the workflow performed by the technical system (10) and/or the component (C1 - Cn), and/or of a zone within the technical system (10) in which the specific component (C1 - Cn) is located.

13. The automatic risk assessment method according to claim 11 or 12, wherein the one or more action control parameters (ACP) are automatically detected by inspecting the technical system (10) or by retrieving the action control parameters (ACP) from a database.

14. The automatic risk assessment method according to any one of the claims 11 to 13, wherein the one or more action control parameters (ACP) are used for modifying the component specific security vulnerability risk (Ra).

15. An automatic risk assessment system (1) for automatically determine an action (ACT) to address a security vulnerability risk (Ra) of a component (C1 - Cn) of a technical system (10), the automatic risk assessment system (1) comprising:
a) a first determination unit (2) for determining security vulnerability data (V1, V2) of the technical system (10) which comprises a plurality of components (C1 - Cn),
b) a mapping unit (4) for mapping the determined security vulnerability data (Rg_v1 - Rg_vn) of the technical system (10) to each component (C1 - Cn) of the technical system (10),
c) a calculation second determination unit (6) for calculating determining a component specific security vulnerability risk (Ra) for a component (C1 - Cn) of the technical system (10) based on the mapped determined security vulnerability data (Rg_v1 - Rg_vn), and
d) a second third determination unit (8) for determining at least one action (AP, ACT) based on the component specific security vulnerability risk (Ra), wherein the at least one action (AP, ACT) is suitable to reduce the component specific security vulnerability risk (Ra) of the component (C1 - Cn).
